(19)

Europäisches
Patentamt
European
Patent Office
Office européen
des brevets

(11) **EP 1 898 515 A1**

(12) **EUROPEAN PATENT APPLICATION**
published in accordance with Art. 153(4) EPC

(43) Date of publication:
**12.03.2008 Bulletin 2008/11**

(51) Int Cl.:
***H02K 9/24*** *(2006.01)*     ***H02K 11/00*** *(2006.01)*

(21) Application number: **06767136.2**

(86) International application number:
**PCT/JP2006/312478**

(22) Date of filing: **22.06.2006**

(87) International publication number:
**WO 2006/137471 (28.12.2006 Gazette 2006/52)**

(84) Designated Contracting States:
**FR GB**

(30) Priority: **23.06.2005 JP 2005183359**

(71) Applicants:
• **KABUSHIKI KAISHA TOSHIBA**
**Tokyo 105-8001 (JP)**
• **Toshiba Plant Systems & Services Corporation**
**Tokyo 144-8721 (JP)**

(72) Inventors:
• **INOUE, Yoshiyuki**
**Intellectual Property Division TOSHIBA**
**CORPORATION**
**Minato-Ku, Tokyo 105-8001 (JP)**
• **SHIMADA, Hideyuki**
**Intellectual Property Division TOSHIBA**
**CORPORATION**
**Minato-Ku, Tokyo 105-8001 (JP)**
• **SEKITO, Shinobu**
**Intellectual Property Division TOSHIBA**
**CORPORATION**
**Minato-Ku, Tokyo 105-8001 (JP)**

• **HASEGAWA, Hiroshi**
**Intellectual Property Division TOSHIBA**
**CORPORATION**
**Minato-Ku, Tokyo 105-8001 (JP)**
• **KANEIWA, Hiroshi**
**Intellectual Property Division TOSHIBA**
**CORPORATION**
**Minato-Ku, Tokyo 105-8001 (JP)**
• **UEMOTO, Shinji**
**Intellectual Property Division TOSHIBA**
**CORPORATION**
**Minato-Ku, Tokyo 105-8001 (JP)**
• **HIRAI, Junichi**
**c/o TOSHIBA PLANT SYSTEMS & SERVICES**
**CORPORATION**
**Ohta-Ku, Tokyo 144-8721 (JP)**

(74) Representative: **Kramer - Barske - Schmidtchen**
**European Patent Attorneys**
**Landsberger Strasse 300**
**80687 München (DE)**

(54) **METHOD FOR DETECTING WATER LEAKAGE OF COIL AND WATER LEAKAGE DETECTOR APPLICABLE TO THIS METHOD**

(57)     According to the present invention, a method of detecting water leakage in a coil, which determines whether or not cooling water leaks into an insulation layer, the water being supplied to a conductor of a coil covered with the insulation layer, including: applying an AC voltage to the conductor; bringing a surface electrode device into pressure contact with the insulation layer; grounding the surface electrode device through an impedance; measuring a potential of the surface electrode device; and determining that the cooling water leaks from the conductor into the insulation layer when a measured potential is higher than a potential of a normal coil

FIG. 1

**Description**

Technical Field

The present invention relates to a method of detecting water leakage in a coil, which detects leakage of cooling water into an insulation layer due to degradation of a brazed portion between copper strands of a conductor and a clip at the end of an insulated coil of high-voltage electrical equipment, and an apparatus for detecting water leakage in a coil applied to the detecting method.

Background Art

As for a rotating machine, a larger amount of current flows through a stator coil (stator winding) as its capacity increases. Along with the increase in current amount, a Joule loss is produced in the stator coil and thus, its temperature is too high to control and design.

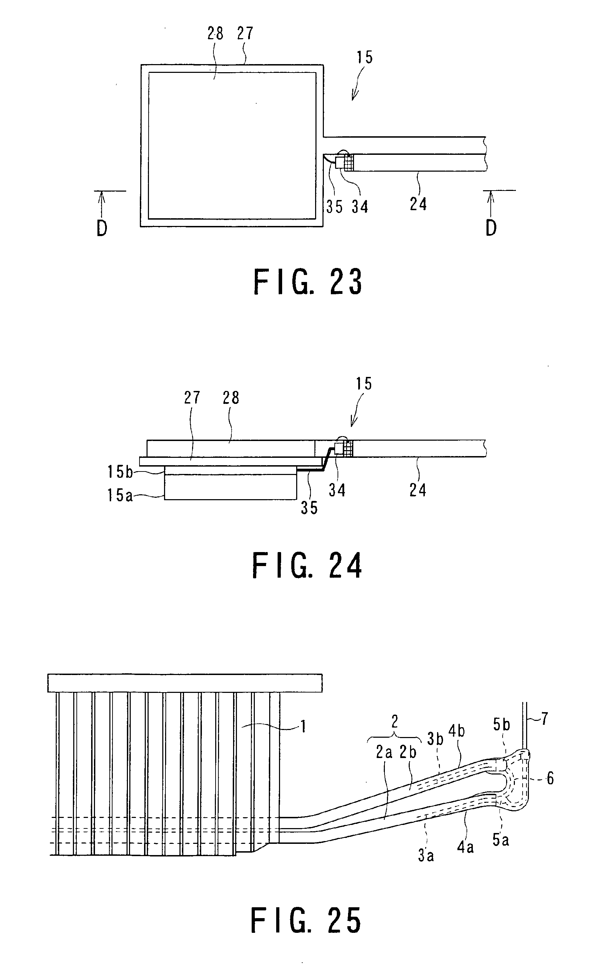

Therefore, as a large-capacity rotating electric machine, a direct water cooling type machine that directly cools a stator coil - which is often referred to as stator bar - with cooling water has been developed in various forms. One structural example thereof is shown in Fig. 25.

According to the structure of Fig. 25, in general large-capacity rotating electric machine, a number of slots are formed in an inner potion of a cylindrical stator core 1, and a coil 2 including a pair of bottom coil section 2b and top coil section 2a are passed through the slots.

As for the coil 2, hollow flat type copper strands or a combination of solid flat type copper strands and hollow flat type strands are used for forming conductors 3a and 3b, the conductors 3a and 3b are molded into a rectangular shape in section, and insulation layers 4a and 4b cover the conductors, respectively.

The upper coil 2a and the lower coil 2b are completed by brazing clips 5a and 5b to end portions of the conductors 3a and 3b and connecting the clips 5a and 5b to each other with a conductor. The conductors 3a and 3b are directly cooled with cooling water such as deionized water, for example, supplied from a cooling water supply through insulation pipe 7.

Incidentally, in some cases, deterioration proceeds in brazed portions between the conductors 3a, 3b and the clips 5a, 5b due to corrosion as a result of repeated operations over the years. Then, a small hole is formed, and cooling water leaks into the insulation layers 4a and 4b and infiltrates to the iron core side along the coil, and finally causes dielectric breakdown of the coil 2 (coils 2a and 2b).

A coil with cooling water leakage into the insulation layer is referred to as wet coil hereinafter, while a dry coil without cooling water leakage is referred to as normal coil hereinafter.

A measure for preventing such dielectric breakdown of the coils 2 (2a, 2b) is described. The brazed portions between the conductors 3a, 3b and the clips 5a, 5b are covered with the insulation layers 4a and 4b and thus cannot be visually observed. Therefore, as means for checking leakage of cooling water into the insulation layers 4a and 4b, various inventions are disclosed, such as a diagnostic device in which an arm device including a capacitance measurement electrode is attached to a rotator retaining ring, and a capacitance of an insulation layer of a stator coil is measured while the arm device is driven to move the stator coil as disclosed in, for example, Japanese Unexamined Patent Application Publication Nos. Hei 9-331656 and Hei 9-51658, or device, in which an electrode is provided in an insulation layer of a coil and a capacitance of the insulation layer between the electrode and a coil conductor or its dielectric constant, is measured as disclosed in, for example, Japanese Unexamined Patent Application Publication No. Hei 10-177053.

In the above publications, an electrode is attached to the coil surface and a capacitance between the electrode and a conductor is measured. If the measured capacitance is higher than that of a normal coil, it is determined that cooling water leaks into an insulation layer.

In this case, the capacitance is measured with a measuring device such as an LCR meter. In general, measurement is performed at a frequency of 1 kHz or higher because of its performance.

However, measurement sensitivity for detecting an insulation layer of the coil infiltrated with cooling water becomes higher at lower frequency.

Thus, up to now, a measurement method capable of detecting leakage at lower frequency has been looked for but has not been found.

Further, it has been known that measurement accuracy is reduced as an electrode area is decreased. In general, an electrode having a surface area of 10 cm$^2$ or more is used.

Therefore, if a large electrode cannot be attached to the coil surface, there arises a problem that measurement accuracy is lowered, and leakage of cooling water to an insulation layer cannot be accurately detected.

Disclosure of the Invention

The present invention has been accomplished in view of the above circumstances, and it is an object of the present invention to provide a method of detecting water leakage in a coil, which can apply an AC voltage at a low frequency of 1 kHz or less or DC voltage and can detect leakage of cooling water with high sensitivity by use of a small electrode device, and a detecting apparatus for water leakage in a coil applied to the detecting method.

To attain the above object, the present invention provides a method of detecting water leakage in a coil, which determines whether or not cooling water leaks into an insulation layer, the water being supplied to a conductor of a coil covered with the insulation layer, the method including: applying an AC voltage to the conductor; bringing a surface electrode device into pressure contact with the insulation layer; measuring a potential of the surface electrode device by grounding the surface electrode device through an impedance; and determining that the cooling water leaks from the conductor into the insulation layer when a measured potential is higher than a potential of a normal coil.

Further, in the method of detecting water leakage in a coil according to the present invention, a potential of the surface electrode device may be measured with one of a non-contact surface electrometer, an AC voltage measuring device, and an oscilloscope.

Further, to attain the above object, the present invention provides a method of detecting water leakage in a coil, which determines whether or not cooling water leaks into an insulation layer, the water being supplied to a conductor of a coil covered with the insulation layer, the method including: applying an AC voltage to the conductor; bringing a surface electrode device into pressure contact with the insulation layer; measuring a phase difference between a potential waveform of the surface electrode device and a waveform of an applied voltage by grounding the surface electrode device through an impedance; and determining that the cooling water leaks from the conductor to the insulation layer when a measured phase difference is different from a normal coil.

Further, to attain the above object, in the method of detecting water leakage in a coil according to the present invention, an input impedance of a potential measurement system is used as an impedance inserted between the surface electrode device and ground.

Further, to attain the above object, the present invention provides a method of detecting water leakage in a coil, which determines whether or not cooling water leaks into an insulation layer, the water being supplied to a conductor of a coil covered with the insulation layer, the method including: applying a DC voltage to the conductor; bringing a surface electrode device grounded through an impedance into pressure contact with the insulation layer; measuring a potential of the surface electrode device; and determining that the cooling water leaks from the conductor to the insulation layer when a measured potential is higher than a potential of a normal coil.

Further, to attain the above object, in the method of detecting water leakage in a coil according to the present invention, the applied DC voltage may be a DC voltage applied stepwise.

Further, to attain the above object, the present invention provides an apparatus for detecting water leakage in a coil, the apparatus including: an AC power source for applying an AC voltage to a conductor or DC voltage source for applying a voltage stepwise upon determining whether or not cooling water supplied to a conductor of a coil covered with the insulation layer leaks into an insulation layer; a surface electrode device brought into contact with the insulation layer; an impedance inserted between the surface electrode device and ground; and a voltage measuring device for measuring a potential of the surface electrode device through a potential measurement probe and a potential meter.

Further, to attain the above object, the present invention provides an apparatus for detecting water leakage in a coil, the apparatus including: an AC power source for applying an AC voltage to a conductor or DC voltage source for applying a voltage stepwise upon determining whether or not cooling water supplied to a conductor of a coil covered with the insulation layer leaks into an insulation layer; a surface electrode device brought into contact with the insulation layer; an impedance inserted between the surface electrode device and ground; and an AC voltage measuring device or an oscilloscope for measuring a potential of the surface electrode device.

Further, to attain the above object, the present invention provides an apparatus for detecting water leakage in a coil, the apparatus including: an AC power source for applying an AC voltage to a conductor or a DC voltage stepwise upon determining whether or not cooling water supplied to a conductor of a coil covered with the insulation layer leaks into an insulation layer; a surface electrode device brought into contact with the insulation layer; an impedance inserted between the surface electrode device and ground; and a computer foe measuring a potential of the surface electrode device though a converter.

Further, to attain the above object, in the apparatus for detecting water leakage in a coil, the surface electrode device may includes: an electrode plate made of a soft elastic material and brought into pressure contact with an insulation layer of a coil; a pressure plate for pressurizing the electrode plate; and an insulation layer, a ground electrode, and a cushion layer inserted between the electrode plate and the pressure plate and arranged in order from the electrode plate side.

Further, to attain the above object, in the apparatus for detecting water leakage in a coil, the surface electrode device may include: an electrode plate made of a soft elastic material and brought into pressure contact with an insulation layer of a coil; a pressure plate for pressurizing the electrode plate; a cushion layer, a ground electrode, and an insulation layer inserted between the electrode plate and the pressure plate and arranged in order from the pressure plate side; and a supporting member for supporting a probe attached to an opening formed at center portions of the pressure plate, the cushion layer, and the ground electrode.

Further, to attain the above object, in the apparatus for detecting water leakage in a coil, the pressure plate may include a grip portion.

Further, to attain the above object, in the apparatus for detecting water leakage in a coil, the surface electrode device may include a ground electrode which provides a cable supporting portion to accommodate a cable, and the insulation layer, a rear electrode plate and the electrode plate made of a soft elastic material which may be laminated in order from the ground electrode.

Further, to attain the above object, in the apparatus for detecting water leakage in a coil, the surface electrode device may include a ground electrode which provides a cable supporting portion to accommodate a cable, and the insulation layer, a rear electrode plate, a cushion layer and the electrode plate which may be laminated in order from the ground electrode, and the rear electrode plate may be electrically connected to the electrode plate.

Further, to attain the above object, in the apparatus for detecting water leakage in a coil, the cable accommodated in the cable supporting portion may be connected to a lead-out line having a conductor connected to the rear electrode plate.

The method of detecting water leakage in a coil according to the present invention and the apparatus for detecting water leakage in a coil applied to the method bring the surface electrode device into contact with the insulation layer covering the coil conductor to measure a potential of the surface electrode device, and judge the coil as suffering water leakage if the measured potential is statically higher than a potential of a normal coil, so that water leakage can be detected with high accuracy at lower frequency that can increase measurement sensitivity, with a small electrode plate.

Brief Description of the Drawings

Fig. 1 is a schematic diagram of an apparatus for detecting water leakage in a coil according to a first embodiment of the present invention;

Fig. 2 is an equivalent circuit diagram for illustrating a method of detecting water leakage in a coil according to the present invention;

Fig. 3 is a dielectric constant diagram showing a result of comparing a change in dielectric constant in the case where water leakage is detected and that in the case where no water leakage is detected in a method of detecting water leakage in a coil according to the present invention, and an apparatus for detecting water leakage in a coil according to a first embodiment, which is applied to the detecting method;

Fig. 4 is a surface electrode potential diagram showing a change in a surface electrode potential relative to a change in the water leakage in a coil according to the first embodiment;

Fig. 5 is a surface electrode potential diagram showing a ratio of a surface electrode potential in the case where the water leakage is detected, to a reference potential as a potential measured when no water leaks in the coil, according to the first embodiment;

Fig. 6 is a surface electrode potential diagram showing a ratio of a surface electrode potential to a reference potential measured when no water leaks in the coil with varying frequencies according to the first embodiment;

Fig. 7 is a schematic diagram of a first modified example of the apparatus for detecting water leakage of the first embodiment;

Fig. 8 is a schematic diagram of a second modified example of the apparatus for detecting water leakage of the first embodiment;

Fig. 9 is a surface electrode potential diagram for explaining a method of detecting the water leakage in a coil according to a second embodiment of the present invention;

Fig. 10 is a diagram of a phase difference in the second embodiment of the present invention, which is calculated with an equivalent circuit;

Fig. 11 is a schematic diagram of a third modified example of the apparatus for detecting water leakage of the first embodiment;

Fig. 12 is a potential diagram for explaining a method of detecting water leakage in a coil according to a third embodiment of the present invention;

Fig. 13 is a potential diagram showing a result of measurement with the method of detecting the water leakage in the coil according to the third embodiment of the present invention;

Fig. 14 is a schematic diagram showing a first embodiment of a surface electrode device applied to the method of detecting the water leakage in the coil according to the present invention;

Fig. 15 is a sectional view taken along the line XV-XV of Fig. 14;

Fig. 16 is a schematic diagram of a second embodiment of the surface electrode device that is applied to the apparatus for detecting the water leakage in the coil according to the present invention;

Fig. 17 is a sectional view taken along the line XVII-XVII of Fig. 16;

Fig. 18 is a plan view of a third embodiment of the surface electrode device that is applied to the apparatus for detecting the water leakage in the coil according to the present invention;

Fig. 19 is a side view of Fig. 18;

Fig. 20 is a sectional view taken along the line XX-XX of Fig. 19;

Fig. 21 is a longitudinal sectional view of a fourth embodiment of the surface electrode device that is applied to the apparatus for detecting the water leakage in the coil according to the present invention;

Fig. 22 is a longitudinal sectional view of a fifth embodiment of the surface electrode device that is applied to the apparatus for detecting the water leakage in the coil according to the present invention;

Fig. 23 is a plan view of a sixth embodiment of the surface electrode device that is applied to the apparatus for detecting the water leakage in a coil according to the present invention;

Fig. 24 is a side view of Fig. 23; and

Fig. 25 is a conceptual view showing a part of a stator coil of a conventional rotating machine.

Best Mode for Carrying Out the Invention

Hereinafter, embodiments of a method of detecting water leakage in a coil according to the present invention and an apparatus for detecting water leakage in a coil applied to the detecting method will be described with reference to the accompanying drawings and reference numerals used in the drawings.

Incidentally, a direct cooling type coil is used as a stator coil in a large-capacity turbine generator in many cases, and thus, the following description is given of the stator coil in a large-capacity turbine generator for illustrative purposes.

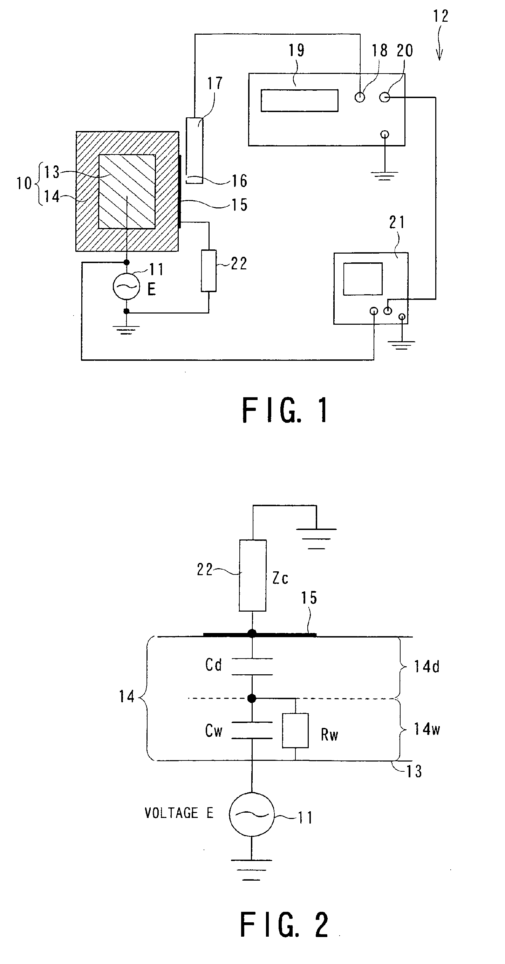

Fig. 1 is a schematic diagram of a detecting apparatus for the water leakage in a coil according to a first embodiment of the present invention.

The detecting apparatus of this first embodiment includes an AC power source 11 for applying an AC voltage to a coil 10 that is directly cooled with cooling water and a potential measuring device 12 for measuring a potential.

The coil 10 is made up of an insulation layer 14 wound around a conductor 13 positioned at the center.

Further, the potential measuring device 12 includes a surface electrode device 15 attached to the insulation layer 14 of the coil 10, a potential measuring probe 17 placed opposite to the surface electrode device 15 and equipped with a potential measurement window 16, a non-contact surface electrometer 19 connected to the potential measuring probe 17 through an input terminal 18 and adapted to measure a potential of the surface electrode device 15, a voltage measuring device 21 connected to the non-contact surface electrometer 19 through an output terminal 20 and adapted to measure an AC voltage applied to the coil 10 with the AC power source 11, and an impedance 22 for connecting the surface electrode device 15 to a grounding terminal of the AC power source 11.

In this embodiment, the non-contact surface electrometer 19 is used for measuring a potential, but the present invention is not limited thereto, and an oscilloscope may be used instead. In this case, a probe adapted to the oscilloscope is selected.

In the thus-configured potential measuring device 12, the method of detecting water leakage in a coil, which aims at detection of a potential corresponding to the water leakage from the conductor 13 into the insulation layer 14, is performed under such conditions that the potential measurement window 16 of the potential measuring probe 17 is brought close to the surface electrode device 15 side of the coil 10.

First, the AC power source 11 applies an AC voltage E to the conductor 13, and a generated potential of the surface electrode device 15 is measured with the non-contact surface electrometer 19 through the potential measuring probe 17, and in addition, the voltage measuring device 21 measures an applied voltage.

If there is a statically significant difference between the measured surface electrode potential and a potential of a surface electrode device of a normal coil, the target coil is judged as suffering water leakage to the insulation layer.

Hereunder, a method of detecting water leakage into the insulation layer from the conductor of the coil, a potential of which has a statically significant difference from the reference potential, is briefly described.

In general, at least 50% or more of coils are kept under normal conditions. Thus, as a surface potential average value of the normal coils, a median value of all measurements may be used. Alternatively, a value corresponding to 50% of a normal probability distribution plot may be used.

Further, in order to determine whether or not a measured value of a target coil is outside a distribution range of the normal coils in consideration of variations in measurement data, the coil may be judged to be not normal if the coil shows measurement data that is "n" times or more as large as a standard deviation ("n" is 3 but may be larger than 3 for a number of wet coils) from a surface potential average value of the normal coils.

Moreover, if a target coil has a potential that is apparently outside of a distribution range of the normal coils in the normal probability plot, the coil may be judged to be not normal.

Incidentally, if the non-contact surface electrometer 19 itself can measure an AC voltage, the voltage may be directly measured with the non-contact surface electrometer 19. Further, if an output voltage of the AC power source 11 is very stabilized, an applied voltage does not need to be measured for each coil every time but needs only to be measured first time.

A waveform of an applied voltage is not limited to a sine waveform, and An AC waveform such as a triangular waveform or a rectangular waveform can be used for detecting water leakage from the conductor to the insulation layer according to the above measuring method.

Fig. 2 is an equivalent circuit diagram for illustrating the method of detecting the water leakage in the coil according to this embodiment.

The equivalent circuit diagram shows a case in an assumption of a condition that the cooling water of the coil 10 leaks to the insulation layer 14 and infiltrates thereinto from the conductor 13 side.

In consideration of a case in which a portion of the insulation layer 14 infiltrated with cooling water is referred to an insulation layer 14W and the other dry portion that is not infiltrated with the cooling water is referred to as an insulation layer 14d.

Fig. 2 shows an equivalent circuit of the insulation layer 14 between the surface electrode device 15 connected to the impedance 22 (i.e., impedance Zc) and the conductor 13 connected to the AC power source 11 as to so as to calculate a potential of the surface electrode device 15.

Further, a humid layer (moisture absorption layer) of the insulation layer 14 is configured by parallel circuit elements, a capacitor Cw and a resistor Rw, because of large dielectric loss, and a dry insulation layer thereof is approximated by a capacitor Cd alone because of small dielectric loss.

Incidentally, in practice, the insulation layer is distinctly divided into two layers of the humid layer and the dry layer. The dividing line is changed with time, and the two layers are mixed in some region. Fig. 2 shows a first approximate example for ease of illustration. A behavior thereof can be understood well from Fig. 2.

If an AC voltage E of a sine waveform is applied by the AC power source 11, a potential Vc of the surface electrode device 15 can be derived from the following expression through circuit analysis.

[Expression 1]

$$Vc = \cfrac{Zc}{\cfrac{Rw}{1+j\omega CwRw} + \cfrac{1}{j\omega Cd} + Zc} \times E \qquad \cdots\cdots(1)$$

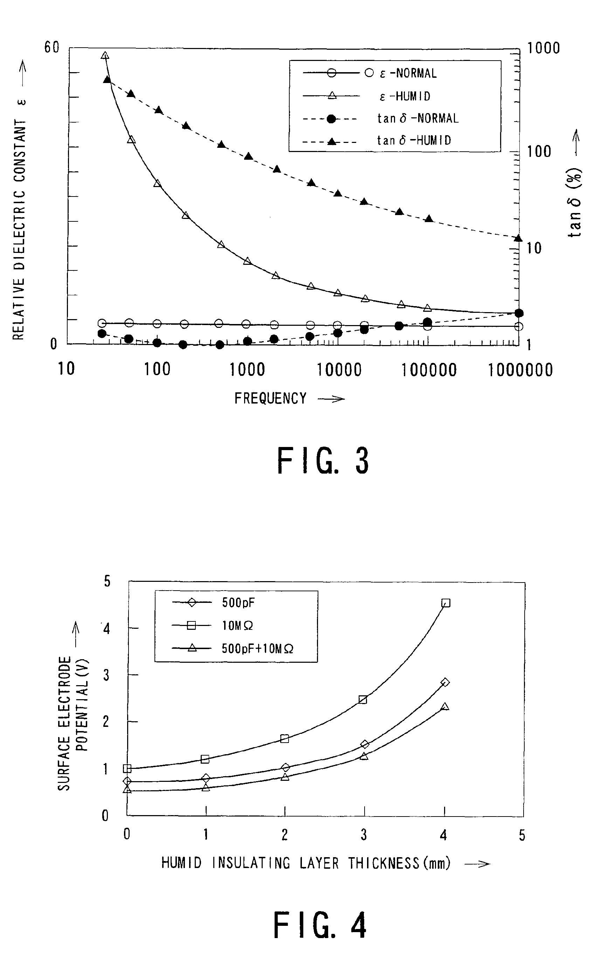

Fig. 3 shows an example of dielectric characteristics of the insulation layer 14 necessary for calculating an equivalent circuit constant of the insulation layer 14.

As apparent from Fig. 3, if water infiltrates into the insulation layer 14, a dielectric constant $\varepsilon$ and a dielectric loss tangent ($\tan\delta$) largely increase, and an increasing rate thereof becomes high as a frequency is lowered. That is, it is assumed that measurement sensitivity to absorbed moisture becomes higher when measurement is carried out at a lower frequency.

Characteristics of the cooling-water-contained (humid) insulation layer and characteristics of the normal insulation layer are shown in Fig. 3 as dielectric constant characteristics. A potential of the surface electrode device 15, which is calculated on the basis of the equivalent circuit diagram of Fig. 2 and Expression (1), is shown in Fig. 4.

Fig. 4 shows calculated potential values of three types of ground impedance elements of the surface electrode device: a capacitor of 500 pF; a resistor of 10 M$\Omega$; and a parallel impedance element where the capacitor of 500 pF and the resistor of 10 M$\Omega$ are parallel-connected, under conditions that an insulation layer thickness is 5 mm, and an area of the surface electrode device is 0.0004 m$^2$, and a frequency of an applied voltage is 50 Hz.

In Fig. 4, the horizontal axis represents a thickness of the humid insulation layer, and the vertical axis represents a potential of the surface electrode device /applied voltage.

As apparent from Fig. 4, a potential of the surface electrode device increases as the thickness of the humid insulation layer increases, and water leakage can be detected with any one of the capacitor, the resistor, and the parallel-connected capacitor and resistor as the ground impedance elements.

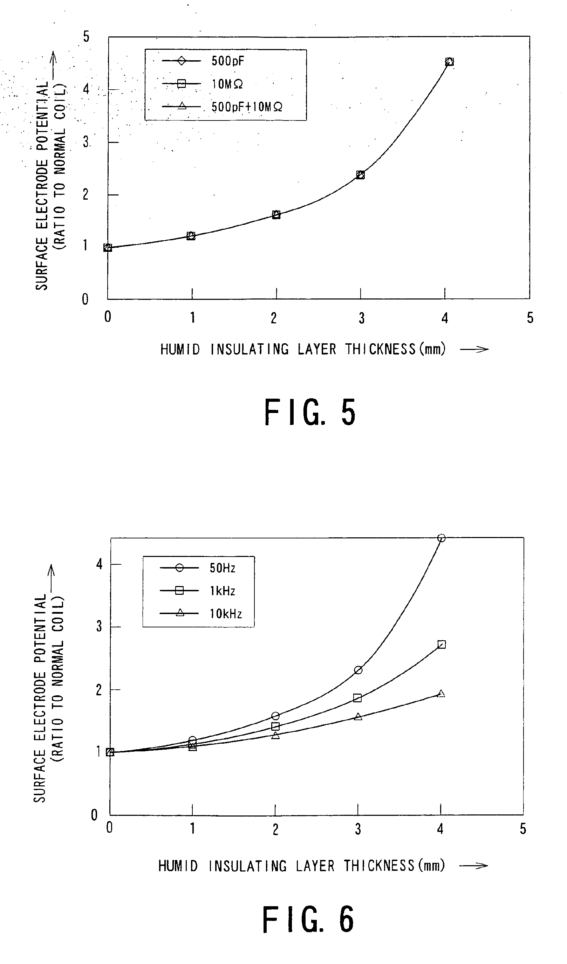

Fig. 4 shows a potential change of the surface electrode device with respect to a change in humid insulation layer thickness. In Fig. 4, if a surface electrode potential on the vertical axis is converted to a potential value of the surface electrode device on the basis of a reference potential of the normal coil, the potential value as shown in a characteristic diagram of Fig. 5 is obtainable. That is, the characteristic diagram of Fig. 5 is given for facilitating the understanding of how much a potential generated at the time when the cooling water leaks into the insulation layer from the conductor of the coil deviates from a reference potential that is obtained when no cooling water leaks, and more specifically, how much the potential generated at the time when water leaks is changed from the value "1", provided that the value "1" represents the case of no water leakage. Thus, the characteristic diagram is substantially the same as Fig. 4. Further, as apparent from Fig. 5, measurement can be made at high sensitivity with any type of ground impedance element, similar to the characteristic diagram of Fig. 4.

Fig. 6 is a potential diagram of the surface electrode device 15, which shows how a potential of the surface electrode device 15 is changed from a reference potential when the water leaks, on the condition that a potential of the surface electrode device 15 of the normal coil is used as a reference, and a voltage is applied at varying frequencies: 50 Hz, 1 kHz and 10 kHz, with the parallel impedance element of the capacitance of 500 pF and the resistance of 10 MΩ.

As apparent from Fig. 6, a characteristic change of the wet coil from a normal coil becomes larger and a sensitivity increases as a frequency for measurement is reduced. Meanwhile, the non-contact surface electrometer 19 is used to measure a potential of the surface electrode device 15 in Fig. 1, but various types of voltage measuring devices may be used as long as input impedance thereof is high and stable.

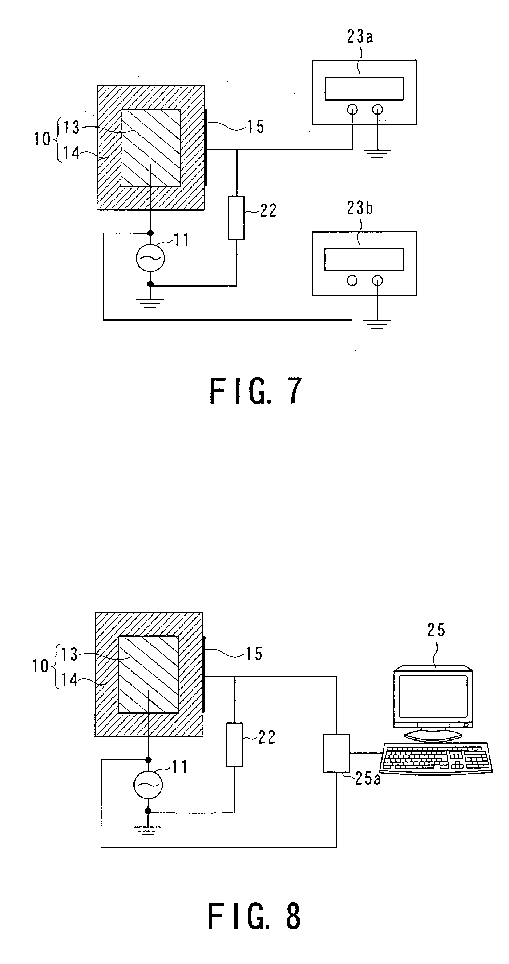

For example, as shown in Fig. 7, if the input impedance is 1 MΩ or more, AC voltage measuring devices 23a and 23b may be used. The AC voltage measuring devices 23a and 23b are digital type or digital multi type voltmeters.

Besides, it is possible to display a voltage waveform with an oscilloscope and measure a voltage. In this case, input impedance cannot be increased unlike the non-contact surface electrometer 19. However, as shown in Fig. 5, measurement can be performed with the same sensitivity if the input impedance varies. In addition, there is an advantage that a measurement system can be configured at low costs.

Incidentally, the impedance 22 may be directly connected to the surface electrode device 15 or connected to the input terminal side of the AC voltage measuring devices 23a and 23b.

As shown in Fig. 8, a voltage waveform or voltage value may be read as a potential of the surface electrode device 15 by a computer 25 through a voltage-measurement A/D converter 25a. Even if such a method is adopted, measurement can be performed at high sensitivity, and a measured value can be immediately entered into the computer 25, which is effective from the viewpoint of high-speed data processing.

As described above, according to this embodiment, in the case of determining whether or not the cooling water leaks from the conductor 13 of the coil 10 into the insulation layer 14 on the basis of potential change of the surface electrode device 15, a low frequency that would increase measurement sensitivity is used, and since a measurement error is small because of simple potential measurement, the leakage of the cooling water can be detected with high accuracy at a high sensitivity.

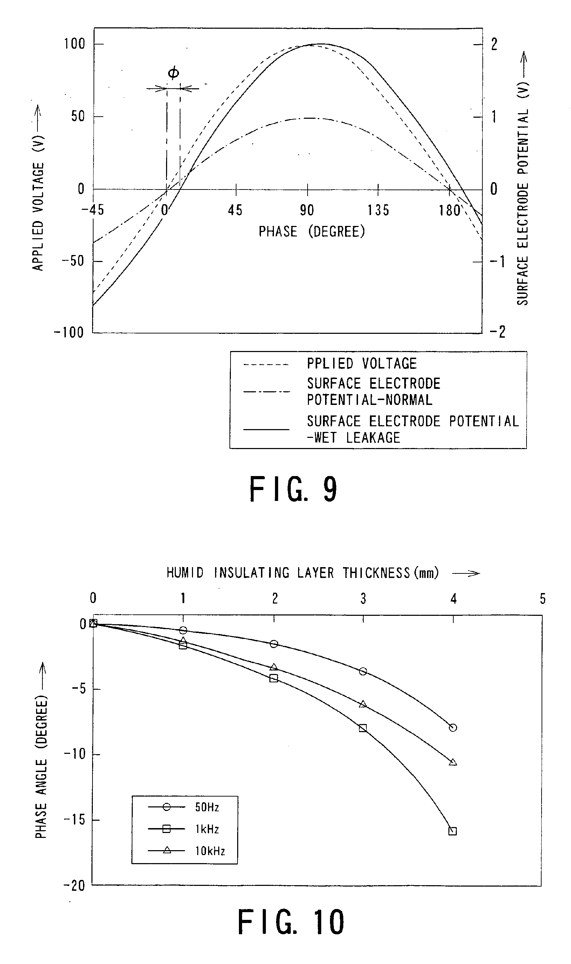

Fig. 9 is a diagram of a surface electrode potential for describing a method of detecting water leakage in a coil according to a second embodiment of the present invention.

This embodiment is accomplished in view of the fact that, at the time of determining whether or not the water leaks from the conductor 13 of the coil 10 into the insulation layer 14, a phase of a potential of the surface electrode device 15 lags behind a potential of an applied voltage due to absorbed moisture of the insulation layer 14.

For example, if an AC voltage of sine waveform having an amplitude of 100 V and a frequency of 50 Hz is applied to the conductor 13 of the coil 10, and detection impedance is set to 750 pF, there is a phase difference $\phi$ between the potential of the surface electrode device 15 of the normal coil as indicated by the dashed line and a potential of the surface electrode device 15 generated when water leaks into the insulation layer 14 as indicated by the solid line.

The phase difference $\phi$ can be easily derived from a time difference at the zero voltage by the oscilloscope indicating both of the applied voltage and the potential of the surface electrode device 15.

Fig. 10 shows an example of the phase difference $\phi$ calculated by an equivalent circuit. In Fig. 10, a voltage is applied at 50 Hz, 1 kHz, and 10 kHz. As apparent from Fig. 10, sensitivity is highest at 1 kHz among the three frequencies.

If the phase difference $\phi$ is detected, the coil is judged as suffering water leakage.

Incidentally, the phase difference $\phi$ may be detected by using a potentiometer, but a phase difference of Fig. 9 may be measured by the circuits of Figs. 1, 7, and 8, or if the computer 25 of Fig. 8 processes data, the difference may be automatically calculated with the computer 25. The latter case is advantageous in that both of a voltage and a potential difference can be measured. Further, the phase difference may be measured in terms of angle (degree or radian). Alternatively, a time difference may be used as data as it is.

As described above, this embodiment focuses on a phase difference that occurs between an applied voltage and a potential of the surface electrode device if the water leaks into the insulation layer, and the phases are measured in accordance with waveforms of the applied voltage waveform and the potential of the surface electrode device. Thus, whether or not the water leaks into the insulation layer can be more easily detected at a higher accuracy.

Incidentally, this embodiment employs a resistor, a capacitor, or a combination thereof as the detection impedance. However, since the measuring device itself, a probe, the surface electrode device, and the like have impedance to the ground. Hence, any one of these measurement systems can be actively used as input impedance or a part of the input impedance.

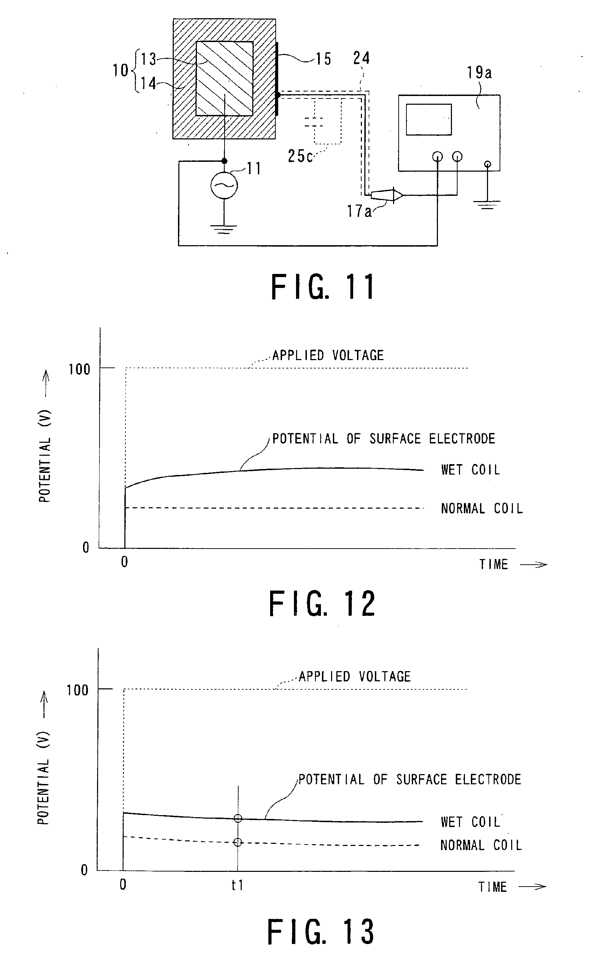

For example, as shown in Fig. 11, a potential of the surface electrode device 15 that is attached to the coil 10 including the conductor 13 and the insulation layer 14 is indicated by an oscilloscope 19a through a coaxial cable 24 and an oscilloscope probe 17a having a voltage ratio of (10 : 1).

A voltage applied to the coil 10 from the AC power source 11 is also indicated by the oscilloscope 19a.

In this case, if the coaxial cable 24 is a 3D2V coaxial cable having a length of 5 m (coaxial cable having characteristic impedance of 50 $\Omega$), a capacitor 25 having a capacitance of 500 pF is inserted between a core wire and a shield.

Further, as the input impedance of the oscilloscope probe 17a, a resistance of 10 M$\Omega$ and a capacitance of 9 pF are inserted between the probe and the ground. Thus, a resistance of 10 M$\Omega$ and a capacitance of 509 pF in total are parallel-connected and equivalently inserted as detection impedance between the surface electrode device 15 and the ground.

Therefore, in this case, it is unnecessary to set any special detection impedance, and the surface electrode device 15 may be configured in a simple manner. Needless to say, the impedance 22 or the capacitor 25 may be provided as shown in Figs. 1, 7, 8, and 11.

Fig. 12 is a potential diagram for describing a method of detecting the water leakage in the coil according to a third embodiment of the present invention.

In this embodiment, a DC voltage is applied stepwise at the time of determining whether or not the water leaks into the insulation layer 14 from the conductor 13 of the coil 10.

As a measurement circuit used for the determination as to whether or not the water leaks, any one of the circuits of Figs. 1, 7, 8, and 11 may be used replacing an AC voltage source to a DC voltage source, for example. Here, a circuit including a measurement system having high input impedance can take advantage of the DC voltage and thus is preferred. Therefore, the non-contact surface electrometer 19 of Fig. 1 is desirable in light of high input impedance.

If the capacitor having a capacitance of 500 pF is u sed as the detection impedance, as shown in Fig. 12, a potential of the surface electrode device 15 is higher than that of a normal coil from the beginning on condition that the insulation layer absorbs moisture. In addition, the potential is increased over time and then saturated. A potential of the surface electrode device 15 is read after a predetermined period from the voltage application or upon the saturation. If the read potential is statically and significantly higher than that of the normal coil, it is determined that the water leaks into the insulation layer 14.

If the DC voltage is applied, it is preferable to temporarily let the surface electrode device 15 be grounded for a short period before the voltage application in order to avoid an influence of charging.

If the input impedance of a measurement system is not so high, a potential of the measured surface electrode device 15 declines over time, not saturated, as shown in Fig. 13.

However, if coils in a single generator are measured by the same measurement system, and a surface potential (indicated by the circles in Fig. 13) is measured after the elapse of the predetermined time $t_1$, a normal coil and a wet coil can be distinguished similarly as in the case where the input impedance is almost infinite.

As described above, whether or not the water leaks into the insulation layer from the coil conductor is determined through measurement with a DC voltage, and accordingly, the detection accuracy and measurement sensitivity can be improved. Moreover, a power source can be reduced in size and weight because the DC voltage is used.

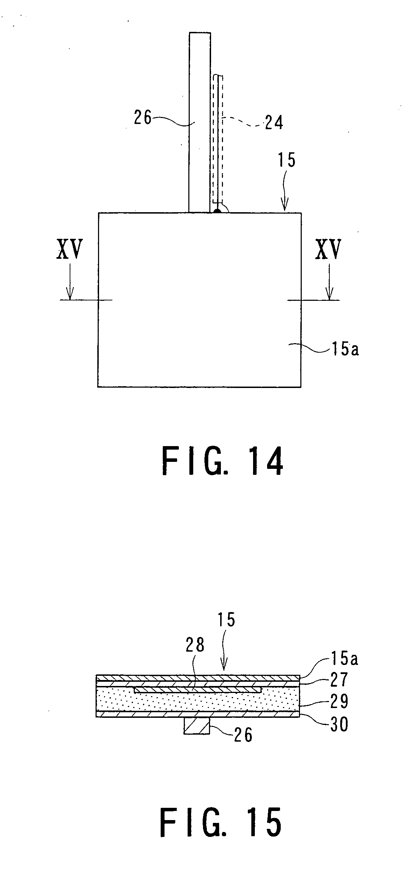

Fig. 14 is a schematic diagram of a first embodiment of a surface electrode device that is applied to the detecting apparatus for detecting the water leakage in the coil according to the present invention.

The surface electrode device 15 applied to the detecting apparatus for the water leakage in the coil includes a coaxial cable 24 attached to an electrode plate 15a and a grip portion 26.

As shown in Fig. 15, the surface electrode device 15 is prepared by bonding an insulation layer 27 made of, for example, polyester film to the electrode plate 15a and bonding a ground electrode 28 to all or a part of the bonded insulation layer.

Further, the surface electrode device 15 includes a pressure plate 30 placed on the ground electrode 28 through a cushion layer 29, and the pressure plate 30 has a grip portion 26.

The pressure plate 30 is placed through the cushion layer 29 for the purpose of brining the electrode plate 15a into close contact with the surface of a gently curved or uneven surface of the coil 10 with ease.

Further, the grip portion 26 is provided on the pressure plate 30 for the purpose of facilitating a process of bringing the electrode plate 15a into close contact with the coil through a small opening between coils.

The core wire of the coaxial cable 24 is connected to the electrode plate 15a and the shield of the coaxial cable 24 is connected to the ground electrode 28. Further, a capacitance between the ground electrode 28 and the electrode plate 15a is used as the impedance 22 as shown in Figs. 1, 7, and 8.

A soft and deformable material is suitable for the electrode plate 15a and the ground electrode 28, so that an appropriate one is selected from metal foil such as tin foil or copper foil, conductive plastics, a conductive rubber film, and a plastic film prepared by applying or evaporating a conductive material thereon.

Further, an appropriate one is selected from various kinds of plastic films such as polyester, polyimide and rubber for the insulation layer 27.

In the examples of Figs. 14 and 15, the surface area of the electrode plate 15a is larger than the ground electrode 28, but the surface area of the ground electrode 28 may be equal to or larger than the electrode plate 15a.

Further, the surface area of the insulation layer 27 needs to be larger than a smaller one of the surface area of the electrode plate 15a and the surface area of the ground electrode 28.

Here, the surface area of the ground electrode 28 is determined on the basis of the detection impedance. Provided that "t" represents a thickness of the insulation layer 27, and "A" represents the surface area of the ground electrode 28, a capacitance Cc between the electrode plate 15a and the ground electrode 28 is derived from the following expression.

[Expression 2]

$$Cc = \varepsilon r \times \varepsilon_0 \times (A/t) \qquad \cdots\cdots(2)$$

where $\varepsilon r$ represents a dielectric constant of the insulation layer 27, and $\varepsilon_0$ represents a dielectric constant under vacuum.

For example, if a polyester film is used on condition that the thickness "t" of the insulation layer 27 is 25 $\mu$m, the dielectric constant $\varepsilon r$ is 3.2, and the surface area "A" of the ground electrode 28 is calculated as follows: 0.02 m x 0.02 = 0.0004 $m^2$, the capacitance Cc is 453 pF.

In this case, the impedance 22 is a capacitor having the capacitance Cc of 453 pF. This value is practically applicable.

As described above, according to this embodiment, the ground electrode 28 is provided in the surface electrode device 15 attached to the surface of the coil 10 so as to keep an impedance therein and shield the coil from disturbance due to potential change of the grip portion 26 or the pressure plate 30. Thus, whether or not the water leaks into the insulation layer can be accurately determined with a small error of potential measurement.

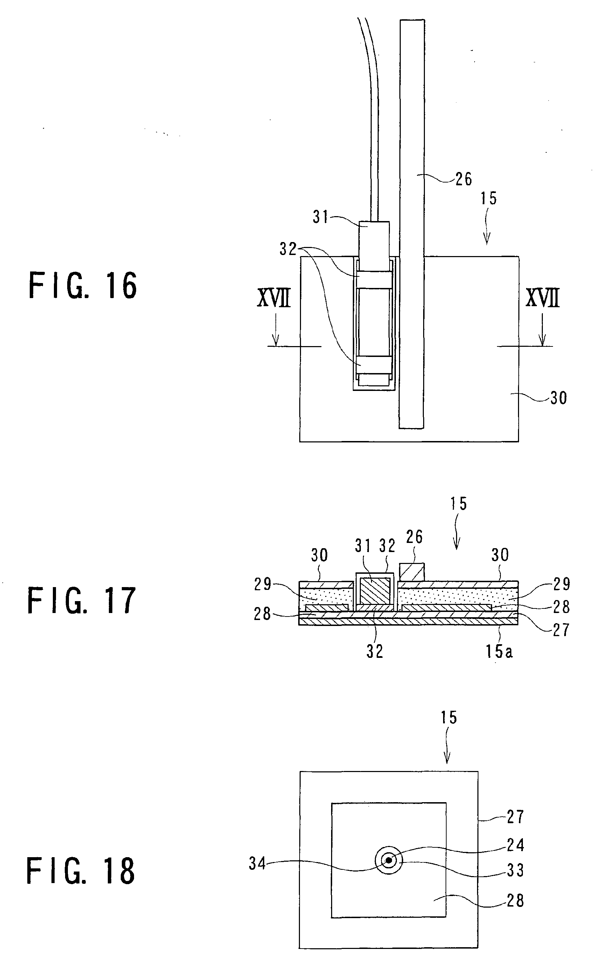

Fig. 16 is a schematic diagram of a second embodiment of the surface electrode device that is applied to the detecting apparatus for detecting the water leakage in the coil according to the present invention.

The surface electrode device 15 applied to the detecting apparatus for the water leakage in the coil includes the pressure plate 30 and the grip portion 26, and also includes a supporting member 32 that makes the pressure plate 30 support the probe 31.

As shown in Fig. 17, the surface electrode device 15 is prepared by bonding an insulation layer to one side surface of the electrode plate 15a and attaching the probe 31 thereto through the supporting member 32 and bonding the ground electrode 28 onto the insulation layer 27 except the probe 31.

Further, in the surface electrode device 15, the cushion layer 29 is bonded thereon except the probe and the supporting member 32, the pressure plate 30 is laminated onto the cushion layer 29, and the grip portion 26 is provided on the pressure plate 30.

As described above, according to this embodiment, the insulation layer 27 is formed in the electrode plate 15a and in addition, an opening is formed with the cushion layer 29, the ground electrode 28 and the pressure plate 30 cut off in part, and the supporting member 32 for supporting and fixing the attached probe 31 is provided in the opening. Upon the measurement, variations in measurements due to the disturbance of peripheral devices are suppressed by a binding force of the supporting member 32. Further, close contact of the electrode plate 15a to the coil (not shown) is increased more by means of cushioning properties of the cushion layer 29. This contributes to further improvement in accuracy for the potential measurement.

Figs. 18 to 20 are schematic diagrams of a third embodiment of the surface electrode device that is applied to the detecting apparatus according to the present invention.

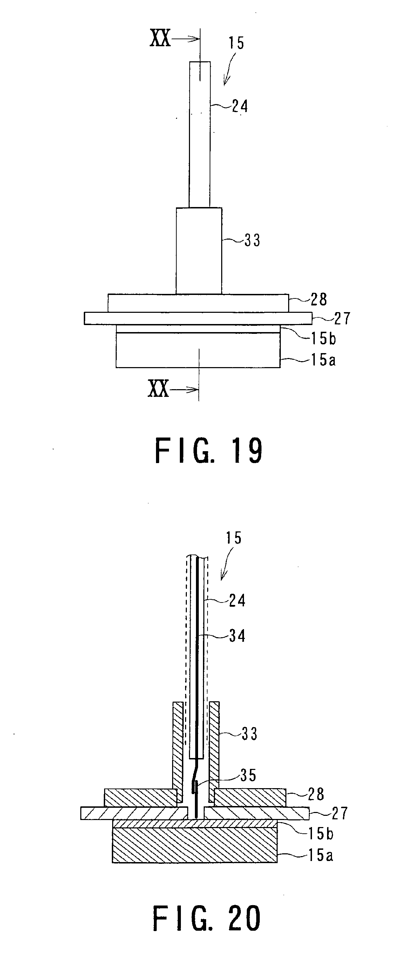

Incidentally, in Figs. 18 to 20, Fig. 18 is a plane view of the surface electrode device, Fig. 19 is a side view of the surface electrode device, and Fig. 20 is a sectional view taken along the line XX-XX of Fig. 19.

The surface electrode device 15 applied to the detecting apparatus for detecting the water leakage in the coil is structured such that the flexible electrode plate 15a filled with conductive particles, in which carbon, metal powder, or short fiber is selected for a rubber material, a rear electrode plate 15b, the insulation layer 27, and the ground electrode 28 are laminated and then bonded in order from the bottom to the top, and a cylindrical cable supporting member 33 is provided, which is mounted on the ground electrode 28, and supports and fixes the coaxial cable 24.

Further, as shown in Fig. 20, the surface electrode device 15 includes a lead-out line 35 having one end connected to a core wire 34 of the coaxial cable 24 supported to the cable supporting member 33 and the other end connected to the rear electrode plate 15b through the insulation layer 27. A shield of the coaxial cable 24 is connected to the ground electrode 28 through the cable supporting member 33 of the surface electrode device 15 or directly to the ground electrode 28.

Further, the other end of the coaxial cable 24 is connected to an AC voltage measuring device (not shown) so as to measure potentials of the electrode plate 15a and the rear electrode plate 15b.

For example, a copper plate or stainless steel plate is preferred as the rear electrode plate 15b so as to facilitate connection of the lead-out line 35. Further, the cable supporting member 33 is preferably made of a conductive material such as metal so as to shield the end of the coaxial cable 24.

According to the above structure, a capacitance between the electrode plate 15a, the rear electrode plate 15b, and the ground electrode 28, a capacitance of the cable supporting member 33 and the core wire 34 of the coaxial cable 24, and input impedance of the AC voltage measuring device (not shown) substantially serve as impedance between the surface electrode device 15 and the ground, and this impedance can be used for calculation with an equivalent circuit.

As described above, according to this embodiment, the lead-out line 35 is provided to the rear electrode plate 15b, and the core wire 34 of the coaxial cable 24 is connected to the lead-out line 35 inside the cable supporting member 33 that supports and fixes the coaxial cable 24 so as to completely shield disturbance of peripheral devices, for example, operations of an adjacent coil or induction from an operator that operates the surface electrode device itself. This contributes to further improvement in accuracy for potential measurement.

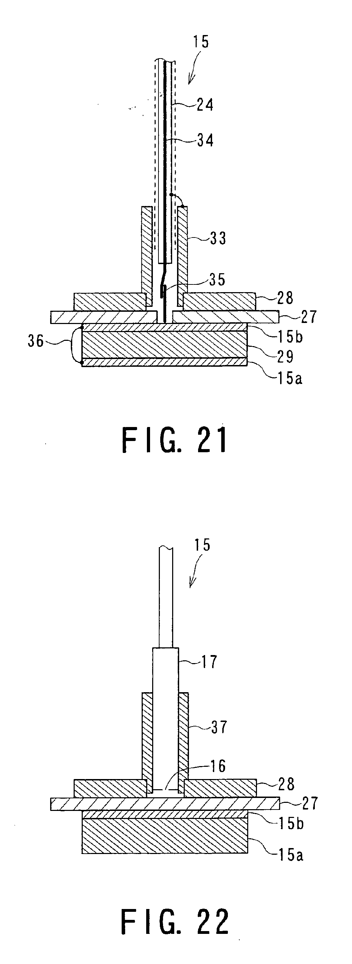

Incidentally, the core wire 34 of the coaxial cable 24 is connected to the lead-out line 35, inside the cable supporting member 33. However, the present invention is not limited to this example. For example, as shown in Fig. 21 as a fourth embodiment of the surface electrode device that is applied to the detecting apparatus for detecting the water leakage in the coil according to the present invention, the core wire 34 of the coaxial cable 24 may be connected to the lead-out line 35, inside the cable supporting member 33, and in addition, the cushion layer 29 may be formed between the electrode plate 15a and the rear electrode plate 15b to connect the electrode plate 15a to the rear electrode plate 15b with a connection line 36.

Fig. 22 is a schematic diagram of a fifth embodiment of the surface electrode device that is applied to the detecting apparatus for detecting the water leakage in the coil according to the present invention.

The surface electrode device 15 applied to this detecting apparatus is structured such that the electrode plate 15a made of a soft elastic material, the rear electrode plate 15b, the insulation layer 27, and the ground electrode 28 made of stainless steel are laminated and then bonded in order from the bottom to the top, and a potential measurement probe supporting member 37 is provided, which is connected to the ground electrode 28, and accommodates the potential measuring probe 17 having the potential measurement window 16.

The potential measurement probe supporting member 37 is manufactured with an insulating glass epoxy laminate plate and has a cylindrical shape.

Incidentally, if another impedance is parallel-connected in addition to the capacitance between the rear electrode plate 15b and the ground electrode 28 as detection impedance, the impedance element is connected, and a potential of the electrode plate 15a is measured with a non-contact surface electrometer (not shown).

As described above, according to this embodiment, the potential measurement probe supporting member 37 for accommodating the potential measuring probe 17 is provided to the ground electrode 28 so as to shield the disturbance of the peripheral devices, which contributes to further improvement in accuracy for the potential measurement.

Positions of the grip portion 26, the coaxial cable 24, the electrode plate 15a, and the ground electrode 28 of Figs. 14 to 22 are not limited to the illustrated positions, but may be shifted by 90°, or a mounting angle may be set variable.

For example, if the mounting position of the coaxial cable 24 of Fig. 20 is shifted by 90°, the coaxial cable 24 is positioned as shown in Figs. 23 and 24 as a sixth embodiment of the surface electrode device that is applied to the detecting apparatus for detecting the water leakage in the coil according to the present invention.

In this case, the coaxial cable 24 is simply bonded to a handle portion of the ground electrode 28 or attached with an adhesive tape without using the cable supporting member.

According to the above structure, a thin surface electrode device is provided, and the electrode plate 15a can be attached to a desired portion even in a limited narrow space between the coils.

Further, the electrode plate 15a and the rear electrode plate 15b have, for example, a rectangular shape in each embodiment. However, the shape is not limited thereto, but may be circle, elliptical, or polygon. Moreover, in the above description, the coaxial cable is used for a conductor connecting the surface electrode device to the AC voltage measuring device, but any other cable than the coaxial cable may be used. Considering potential measurement at a low frequency, a cable including a shield is preferred.

**Claims**

1. A method of detecting water leakage in a coil, which determines whether or not cooling water leaks into an insulation layer, the water being supplied to a conductor of a coil covered with the insulation layer, comprising the steps of:

   applying an AC voltage to the conductor;
   bringing a surface electrode device into pressure contact with the insulation layer;
   measuring a potential of the surface electrode device by grounding the surface electrode device through an impedance; and
   determining that the cooling water leaks from the conductor into the insulation layer when a measured potential is higher than a potential of a normal coil.

2. The method of detecting water leakage in a coil according to claim 1, wherein the potential of the surface electrode device is measured by either one of a non-contact surface electrometer, an AC voltage measuring device and an oscilloscope.

3. A method of detecting water leakage in a coil, which determines whether or not cooling water leaks into an insulation layer, the water being supplied to a conductor of a coil covered with the insulation layer, comprising the steps of:

   applying an AC voltage to the conductor;
   bringing a surface electrode device into pressure contact with the insulation layer;
   measuring a phase difference between a potential waveform of the surface electrode device and a waveform of an applied voltage by grounding the surface electrode device through an impedance; and
   determining that the cooling water leaks from the conductor to the insulation layer when a measured phase difference is different from a normal coil.

4. The method of detecting water leakage in a coil according to claim 1 or 3, wherein the input impedance of the potential measurement system is used as an impedance inserted between the surface electrode device and ground.

5. A method of detecting water leakage in a coil, which determines whether or not cooling water leaks into an insulation layer, the water being supplied to a conductor of a coil covered with the insulation layer, comprising the steps of:

   applying a DC voltage to the conductor;
   bringing a surface electrode device grounded through an impedance into pressure contact with the insulation layer;
   measuring a potential of the surface electrode device; and
   determining that the cooling water leaks from the conductor to the insulation layer when a measured potential is higher than a potential of a normal coil.

6. The method of detecting water leakage in a coil according to claim 5, wherein the applied DC voltage is a DC voltage applied stepwise.

7. An apparatus for detecting water leakage in a coil, comprising:

   an AC power source for applying an AC voltage to a conductor or DC voltage source for applying a voltage stepwise upon determining whether or not cooling water supplied to a conductor of a coil covered with the insulation layer leaks into an insulation layer;
   a surface electrode device brought into contact with the insulation layer;
   an impedance inserted between the surface electrode device and ground; and
   a voltage measuring device for measuring a potential of the surface electrode device through a potential measurement probe and a potential meter.

8. An apparatus for detecting water leakage in a coil, comprising:

   an AC power source for applying an AC voltage to a conductor or DC voltage source for applying a voltage stepwise upon determining whether or not cooling water supplied to a conductor of a coil covered with the insulation layer leaks into an insulation layer;
   a surface electrode device brought into contact with the insulation layer;

an impedance inserted between the surface electrode device and ground; and

an AC voltage measuring device or an oscilloscope for measuring a potential of the surface electrode device.

9. An apparatus for detecting water leakage in a coil, comprising:

an AC power source for applying an AC voltage to a conductor or a DC voltage stepwise upon determining whether or not cooling water supplied to a conductor of a coil covered with the insulation layer leaks into an insulation layer;

a surface electrode device brought into contact with the insulation layer;

an impedance inserted between the surface electrode device and ground; and

a computer for measuring a potential of the surface electrode device though a converter.

10. The apparatus for detecting water leakage in a coil according to any one of claims 7 to 9, wherein the surface electrode device includes: an electrode plate made of flexible material and brought into pressure contact with an insulation layer of a coil; a pressure plate for pressurizing the electrode plate; and an insulation layer, a ground electrode, and a cushion layer inserted between the electrode plate and the pressure plate and arranged in order from the electrode plate side.

11. The apparatus for detecting water leakage in a coil according to any one of claims 7 to 9, wherein the surface electrode device includes: an electrode plate made of a soft elastic material and brought into pressure contact with an insulation layer of a coil; a pressure plate for pressurizing the electrode plate; a cushion layer, a ground electrode, and an insulation layer inserted between the electrode plate and the pressure plate and arranged in order from the pressure plate side; and a supporting member for supporting a probe attached to an opening formed at center portions of the pressure plate, the cushion layer, and the ground electrode.

12. The apparatus for detecting water leakage in a coil according to claim 10 or 11, wherein the pressure plate includes a grip portion.

13. The apparatus for detecting water leakage in a coil according to any one of claims 7 to 9, wherein the surface electrode device includes a ground electrode which mounts a cable supporting portion to accommodate a cable, and the insulation layer, a rear electrode plate and the electrode plate made of a soft elastic material which may be laminated in order from the ground electrode.

14. The apparatus for detecting water leakage in a coil according to any one of claims 7 to 9, wherein the surface electrode device includes a cable supporting portion that is provided to a ground electrode and accommodates a cable, and wherein the insulation layer, a rear electrode plate, a cushion layer and the electrode plate which are laminated in order from the ground electrode, and the rear electrode plate is electrically connected to the electrode plate.

15. The apparatus for detecting water leakage in a coil according to claim 13 or 14, wherein the cable accommodated in the cable supporting portion is connected to a lead-out line having a conductor connected to the rear electrode plate.

FIG. 1

FIG. 2

FIG. 3

FIG. 4

FIG. 5

FIG. 6

**F I G. 7**

**F I G. 8**

FIG. 9

FIG. 10

## FIG. 11

## FIG. 12

## FIG. 13

FIG. 14

FIG. 15

FIG. 16

FIG. 17

FIG. 18

FIG. 19

FIG. 20

# F I G. 21

# F I G. 22

FIG. 23

FIG. 24

FIG. 25

## INTERNATIONAL SEARCH REPORT

| International application No. |
| --- |
| PCT/JP2006/312478 |

A. CLASSIFICATION OF SUBJECT MATTER
*H02K9/24*(2006.01)i, *H02K11/00*(2006.01)i

According to International Patent Classification (IPC) or to both national classification and IPC

B. FIELDS SEARCHED

Minimum documentation searched (classification system followed by classification symbols)
H02K9/24, H02K11/00

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2003-315402 A (Toshiba Corp., Toshiba Engineering Corp., Toshiba Aitekku Kabushiki Kaisha), 06 November, 2003 (06.11.03), Par. Nos. [0070] to [0152]; Figs. 3 to 26 & WO 2003/091743 A1 & CN 1650185 A & EP 1503218 A1 & CA 2483567 A1 | 1-15 |
| Y | JP 4-299050 A (Mitsubishi Electric Corp.), 22 October, 1992 (22.10.92), Par. Nos. [0009] to [0014]; Figs. 1 to 3 (Family: none) | 1-15 |
| Y | JP 4-299051 A (Mitsubishi Electric Corp.), 22 October, 1992 (22.10.92), Par. Nos. [0009] to [0013]; Figs. 1 to 3 (Family: none) | 1-15 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 04 September, 2006 (04.09.06) | Date of mailing of the international search report 12 September, 2006 (12.09.06) |
| --- | --- |
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

| International application No. |
|---|
| PCT/JP2006/312478 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-148039 A (Toshiba Corp., Toshiba Plant Systems & Services Corp.), 09 June, 2005 (09.06.05), Full text; Figs. 1 to 34 & WO 2005/040840 A1 | 1-15 |
| A | JP 49-3105 A (Mitsubishi Electric Corp.), 11 January, 1974 (11.01.74), Full text; Figs. 1 to 5 (Family: none) | 1-15 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9331656 A
- JP 9051658 A
- JP 10177053 A